# EUROPEAN PATENT APPLICATION

(11) **EP 4 697 515 A1**
(43) Date of publication of application: **18.02.2026**
(21) Application number: 25195008.5
(22) Date of filing: 08.08.2025
(51) Int. Cl.: H01R 13/04, H01R 13/44, H01R 43/16, H01R 13/52

(54) **CHARGING TERMINAL FOR CHARGING INLET ASSEMBLY**

(30) Priority: 12.08.2024 US 202463682208 P; 11.12.2024 US 202418976601
(71) Applicant: TE Connectivity Solutions GmbH, 8200 Schaffhausen (CH)
(72) Inventor: VENKATESAN, Ram Kishore, WINSTON SALEM, NC 27101-2166 (US); HITCHCOCK, Matthew Bryan, MIDDLETOWN, PA 17057 (US); DAWLEY, Evan, Troy, MI 48084 (US); MARTIN, Galen, MIDDLETOWN, PA 17057 (US); SHIELDS, Eric, WINSTON SALEM, NC 27101-2166 (US); PETERSON, Kevin John, WINSTON SALEM, NC 27101-2166 (US); PLASENCIA, Joel, WINSTON SALEM, NC 27101-2166 (US); MYER, Nathan Philip, MIDDLETOWN, PA 17057 (US)
(74) Representative: Ashton, Gareth Mark

(57) **Abstract**

A method of manufacturing a charging terminal (120) for a charging inlet assembly (100) includes forming a terminal body (200) to include a shell (214) surrounding an interior bore (216). The terminal body extends between a front (130) and a rear (132) and the interior bore extends the entire length of the terminal body from the front to the rear. Forming the terminal body includes one of deep drawing the terminal body to form the shell and the interior bore or stamping and forms the terminal body to form the shell and the interior bore or extruding the terminal body into a tube to form the shell and the interior bore. The method includes forming a mating pin (220) at the front for mating with a charging connector and forming a power cable termination (240) at the rear for termination to a power cable. The method includes securing a protection cap (202) to the front that is dielectric and extends forward of the mating pin.

## Description

This application claims benefit to US Application No. 63/682,208, filed 12-August-2024, the subject matter of which is herein incorporated by reference in its entirety.

The subject matter herein relates generally to charging inlet assemblies.

In order to charge a battery of an electric vehicle (EV) or hybrid electric vehicle (HEV), the vehicle is provided with a charging inlet assembly. Charging terminals are held by a housing of the charging inlet assembly. A charging connector is configured to be mated with the charging terminals of the charging inlet assembly to charging the battery system of the vehicle. The terminals extend through channels in the housing into a chamber at the rear of the housing for connection to corresponding power cables. In some known charging inlet assemblies, the charging terminals are designed for high power charging. The charging terminals are designed to handle high current and high amperage, such as up to 500 Amps at 500 Volts, for DC fast charging. In conventional charging inlet assemblies, the charging terminals are solid metal pins that are machined to a predetermined profile. A bore is drilled into the front end of the pin to receive a protection cap to make the pin touch-safe. The charging terminals are expensive to manufacture and contribute to the overall cost of the charging inlet assembly.

A need remains for a charging inlet assembly that may be manufactured in a cost effective and reliable manner.

In one embodiment, a method of manufacturing a charging terminal for a charging inlet assembly is provided including forming a terminal body to include a shell surrounding an interior bore. The terminal body extends between a front and a rear and the interior bore extends the entire length of the terminal body from the front to the rear. Forming the terminal body may for example include one of deep drawing the terminal body to form the shell and the interior bore or stamping and forming the terminal body to form the shell and the interior bore or extruding the terminal body into a tube to form the shell and the interior bore. The method includes forming a mating pin at the front for mating with a charging connector and forming a power cable termination at the rear for termination to a power cable. The method includes securing a protection cap to the front that is dielectric and extends forward of the mating pin. The method may include positioning a temperature sensor in the interior bore to measure a temperature of the shell.

There is also provided a charging terminal for a charging inlet assembly, for example manufactured by the above method of manufacturing. The charging terminal may comprise a terminal body that is a shell with an interior bore. The terminal body extends between a front and a rear, the terminal body including a mating pin at the front for mating with a charging connector, the terminal body including a power cable termination at the rear for termination to a power cable; and a protection cap received in the interior bore at the mating end, the protection cap extending forward of the mating pin, the protection cap being dielectric. The interior bore extends the entire length of the terminal body from the mating pin at the front to the power cable termination at the rear. The interior bore may also extend entirely along the mating pin at the front, and/or entirely along the power cable termination at the rear. The terminal body may be one of a deep drawn terminal body drawn to form the shell or a stamped and formed terminal body stamped to form the shell, or an extruded terminal body extruded into a tube shape to form the shell.

The invention will be described by way of example with reference to the accompanying Figures of which:
Figure 1 is a front perspective view of a charging inlet assembly in accordance with an exemplary embodiment.
Figure 2 is a rear perspective view of the charging inlet assembly in accordance with an exemplary embodiment.
Figure 3 is a side view of the charging terminal in accordance with an exemplary embodiment.
Figure 4 is a cross-sectional view of the charging terminal in accordance with an exemplary embodiment.
Figure 5 is a cross-sectional view of the charging terminal 120 in accordance with an exemplary embodiment.
Figure 6 is a cross sectional view of a portion of the charging terminal in accordance with an exemplary embodiment showing the terminal body.
Figure 7 is a cross sectional view of a portion of the charging terminal in accordance with an exemplary embodiment showing the protection cap coupled to the terminal body.
Figure 8 is a perspective view of the charging terminal shown in Figures 6 and 7 in accordance with an exemplary embodiment.
Figure 9 is a cross sectional view of a portion of the charging terminal in accordance with an exemplary embodiment.
Figure 10 is a cross sectional view of a portion of the charging terminal in accordance with an exemplary embodiment showing the terminal body in an initial formed state.
Figure 11 is a cross sectional view of a portion of the charging terminal in accordance with an exemplary embodiment showing the terminal body in a final formed state.
Figure 12 is a cross sectional view of a portion of the charging terminal in accordance with an exemplary embodiment showing the terminal body in an initial formed state.
Figure 13 is a cross sectional view of a portion of the charging terminal in accordance with an exemplary embodiment showing the terminal body in an intermediate formed state.
Figure 14 is a cross sectional view of a portion of the charging terminal in accordance with an exemplary embodiment showing the terminal body in a final formed state.
Figure 15 is a cross sectional view of a portion of the charging terminal in accordance with an exemplary embodiment showing the terminal body in a final formed state.
Figure 16 illustrates the charging terminal 120 in accordance with an exemplary embodiment.
Figure 17 is a cross-sectional view of the charging terminal 120 shown in Figure 15.
Figure 18 is a cross sectional view of a portion of the charging terminal shown in Figure 15showing the charging terminal in the charging inlet housing.
Figure 19 is an enlarged view of a portion of the charging terminal shown in Figure 15 in accordance with an exemplary embodiment.

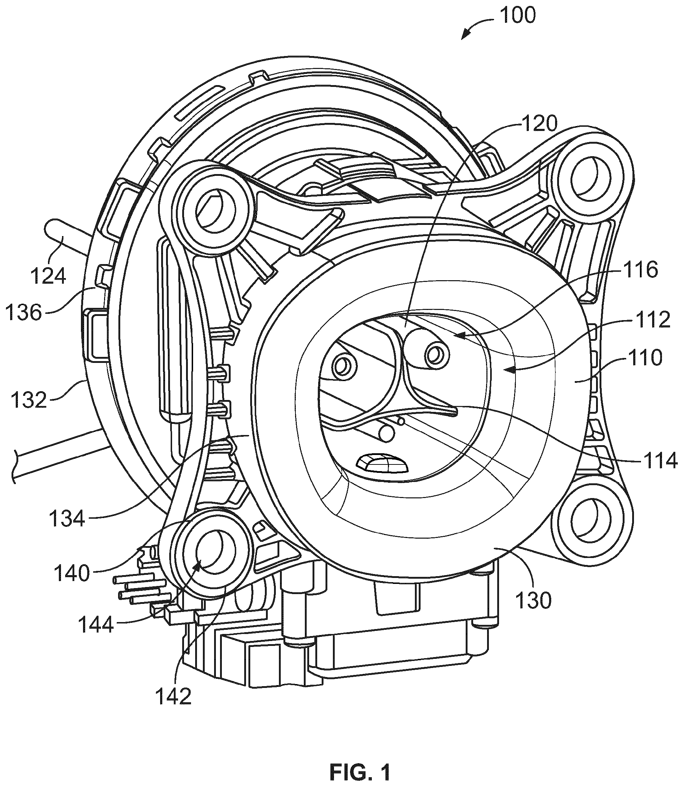

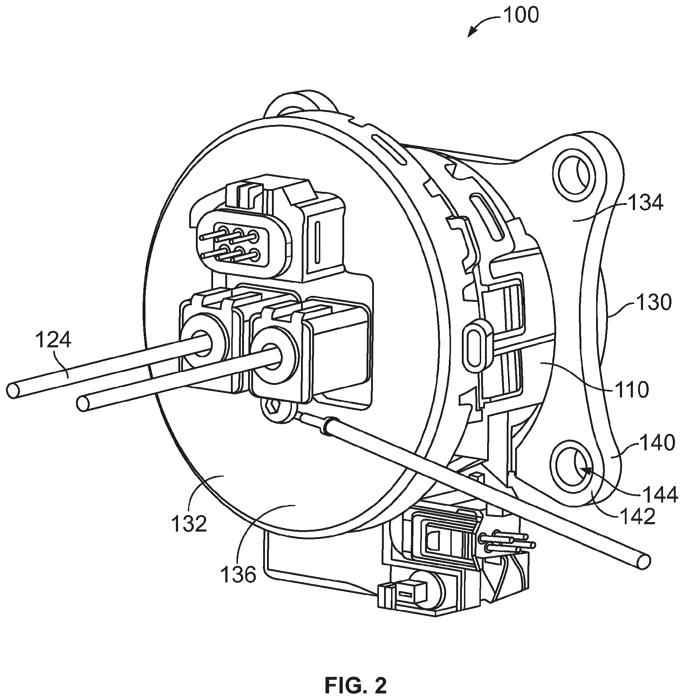

Figure 1 is a front perspective view of a charging inlet assembly 100 in accordance with an exemplary embodiment. Figure 2 is a rear perspective view of the charging inlet assembly 100 in accordance with an exemplary embodiment. The charging inlet assembly 100 is used as a charging inlet for a vehicle, such as an electric vehicle (EV) or hybrid electric vehicle (HEV). The charging inlet assembly 100 is configured for mating reception with a charging connector, for example, a charging plug from a charging station (not shown). In an exemplary embodiment, the charging inlet assembly 100 is configured for mating with various types of charging connectors, such as an AC charger or a DC charger. The charging inlet assembly 100 may be a North American Charging System (NACS) charger, an SAE J1772 charger, a CCS1 charger, a CCS2 charger, or another type of charger.

The charging inlet assembly 100 includes a housing 110 configured to be mounted in the vehicle. The charging inlet housing 110 includes a charging socket 112 configured to receive the charging connector. The charging inlet housing 110 includes walls 114 in the charging socket 112 forming different pockets or terminal channels 116. The charging inlet housing 110 holds charging terminals 120 in the terminal channels 116.

In an exemplary embodiment, the charging terminals 120 may be AC charging terminals and/or DC charging terminals and/or ground terminals and/or proximity terminals and/or pilot terminals. Optionally, the charging terminals 120 may be different sized terminals. In an exemplary embodiment, the charging terminals 120 include pins at mating ends of the charging terminals 120.

In an exemplary embodiment, power conductors 124 are terminated to the charging terminals 120. One or more of the power conductors 124 extend from the charging inlet assembly 100 to another component of the vehicle, such as the battery system of the vehicle. In various embodiments, the power conductors 124 may be power cables. In other various embodiments, the power conductors 124 may be busbars. The power conductors 124 may include circuits of a printed circuit board. In various embodiments, the power conductors 124 include AC conductors and DC conductors extending to different components of the vehicle. The power conductors 124 may extend straight away from the charging inlet housing 110 or may extend away from the charging inlet housing 110 at 90° (for example, right angle) or at other angles.

In an exemplary embodiment, an AC module of the charging inlet assembly 100 defines a low-voltage connector configured to be coupled to a low-voltage portion of the charging connectors. The AC module is configured to be coupled to other components in the system, such as a battery distribution unit, to control charging of the vehicle. The AC module may transmit/receive signals relating to charging, such as status of connection, status of charge, voltage of charge, and the like.

In an exemplary embodiment, a DC module of the charging inlet assembly 100 defines a high-voltage connector configured to be coupled to a high-voltage portion of the charging connector. The DC module is configured to be coupled to other components in the system, such as the battery and/or the battery distribution unit of the vehicle. The DC module may be used for fast charging of the battery.

The charging inlet housing 110 includes a front 130 and a rear 132. The front 130 of the housing 110 faces outward and is presented to the operator to connect the charging connector. The rear 132 faces the interior of the vehicle and is generally inaccessible without removing the charging inlet housing 110 from the vehicle. The charging inlet housing 110 includes a panel 134 at the front 130.

In an exemplary embodiment, the housing 110 includes a mounting flange 140 (Figure 1) coupled to the panel 134 at the front 130. The mounting flange 140 includes mounting tabs 142 used for mounting the housing 110 to the vehicle. The mounting tabs 142 having openings 144 that receive fasteners (not shown) to secure the charging inlet assembly 100 to the vehicle. Other types of mounting features may be used to secure the charging inlet assembly 100 to the vehicle. The housing 110 and/or the mounting flange may include a seal to seal the charging inlet assembly 100 to the vehicle.

In various embodiments, the charging inlet assembly 100 may include a terminal cover (not shown) at the front of the charging inlet housing 110 to cover portions of the charging inlet housing 110. The charging inlet housing 110 may include one or more rear covers 136 at the rear of the housing 110 to close access to the rear of the charging inlet housing 110. The rear cover(s) 136 may be clipped or latched onto the main part of the housing 110, such as using clips or latches. Other types of securing features, such as fasteners, may be used in alternative embodiments.

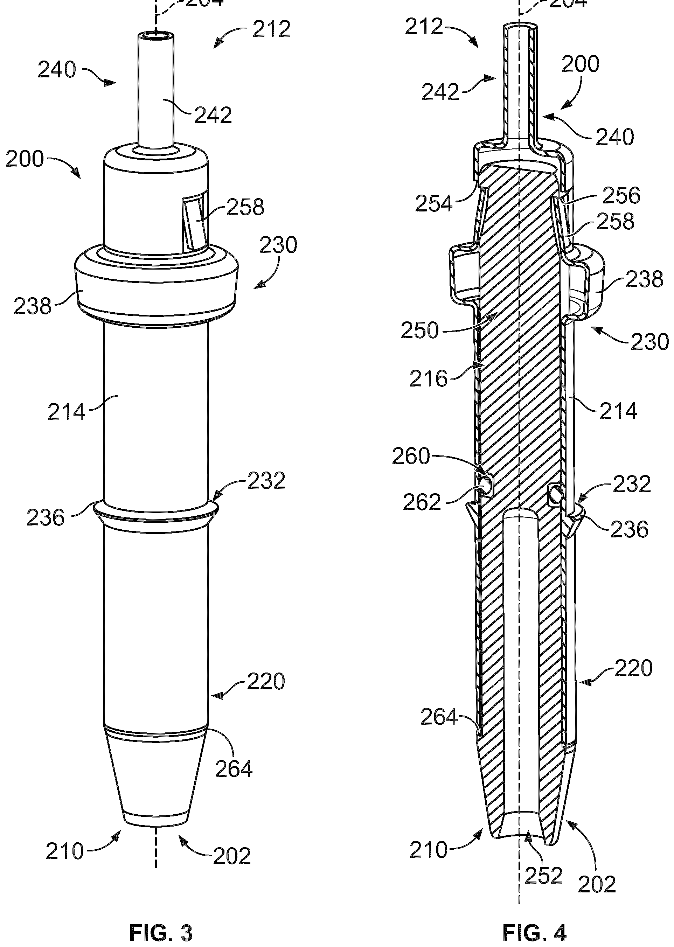

Figure 3 is a side view of the charging terminal 120 in accordance with an exemplary embodiment. Figure 4 is a cross-sectional view of the charging terminal 120 in accordance with an exemplary embodiment. The charging terminal 120 includes a terminal body 200 and a protection cap 202 extending from the terminal body 200. The protection cap 202 is dielectric and configured to provide a touch safe tip at the front of the charging terminal 120, such as to prevent damage or harm from inadvertent touching.

The terminal body 200 is configured to be mated to the charging connector. The terminal body 200 is configured to be electrically connected to the power conductors 124 (shown in Figure 2). For example, the power conductors 124 may be crimped, welded, or bolted to an end of the terminal body 200. In an exemplary embodiment, the terminal body 200 includes a crimp barrel at the terminating end configured to be crimped to the power conductor 124. In an exemplary embodiment, the terminal body 200 is formed from a low cost manufacturing process, such as a deep drawing process, a stamping and forming process, an extrusion process, or other low cost manufacturing process. The terminal body 200 may be relatively thin to reduce cost. For example, the terminal body 200 may have a thickness selected to accommodate low power charging, such as AC charging. The terminal body 200 may have a thickness selected to accommodate charging at below 100 Amps, and may have a thickness selected to accommodate charging at below 80 Amps. The terminal body 200 may have a thickness selected to accommodate charging at below 20 kW.

The charging terminal 120 extends along a longitudinal axis 204. In an exemplary embodiment, the charging terminal 120 is generally cylindrical. For example, the charging terminal 120 includes one or more cylindrical sections of varying diameter. For example, the charging terminal 120 may be stepped inward or outward along the longitudinal axis 204.

In an exemplary embodiment, the terminal body 200 is electrically conductive. For example, the terminal body 200 may be manufactured from a metal material, such as a copper material, an aluminum material, a stainless-steel material, or other metal material or alloy. The charging terminal 120 may have one or more plating layers on the terminal body 200 to enhance characteristics of the charging terminal 120, such as conductivity, durability, resistance to corrosion, and the like.

The terminal body 200 extends between a front 210 and a rear 212. The front 210 defines a mating end of the charging terminal 120 configured to be mated with the charging connector. The rear 212 defines a terminating end of the charging terminal 120 configured to be terminated to the power conductor 124. In an exemplary embodiment, the terminal body 200 includes a shell 214 surrounding an interior bore 216. For example, the shell 214 may be hollow along the length. The shell 214 extends between the front 210 and the rear 212. The interior bore 216 extends between the front 210 and the rear 212, such as the entire length of the terminal body 200 between the front 210 and the rear 212. In contrast to conventional charging terminals, which are screw machined from a solid metal bar, the shell 214 is formed from a low-cost manufacturing process, such as a deep drawing process, a stamping and forming process, an extrusion process, or other low cost manufacturing process. The deep drawing process may make the length of the shell 214 from the front 210 to the rear 212 greater than the width of the shell 214. The shell 214 may be relatively thin. For example, the shell 214 may be formed from a metal sheet, such as a plate or film. The shell 214 has a thickness corresponding to the sheet metal thickness. The thickness of the shell 214 may be considerably less than the overall diameter of the terminal body 200, such as less than 25% of the diameter. In various embodiments, the thickness of the shell 214 may be less than 10% of the diameter. In some embodiments, the thickness of the shell 214 may be less than 5% of the diameter. Providing a thin shell 214 reduces cost of the charging terminal by reducing material cost. Providing a thin shell 214 reduces cost of the charging terminal by allowing inexpensive forming processes, such as a drawing process, stamping and forming process, extrusion process, and the like.

The terminal body 200 includes a mating pin 220 at the front 210 configured to be mated to the charging connector. The mating pin 220 may be generally cylindrical. The mating pin 220 has a length and a diameter configured to be plugged into a charging socket of the charging connector. In various embodiments, the mating pin 220 may be designed for the NACS standard having a diameter of 8.9mm. The interior bore 216 passes through the mating pin 220. The protection cap 202 is coupled to the terminal body 200 and extends forward of the mating pin 220.

The terminal body 200 includes a mounting portion 230 rearward of the mating pin 220. The mounting portion 230 is used for mounting the terminal body 200 in the charging inlet housing 110. The mounting portion 230 may have a larger diameter than the mating pin 220. In an exemplary embodiment, the mounting portion 230 may have a latching feature 232 formed circumferentially around the mounting portion 230, such as near a forward end of the mounting portion 230. The latching feature 232 may interface with a latching beam of the charging inlet housing 110 to secure the terminal body 200 in the charging inlet housing 110. In an exemplary embodiment, the mounting portion 230 includes a seal retaining feature 236 that receives a seal (not shown). The seal retaining feature 236 may be a groove or pocket that receives the seal (for example, an o-ring). The seal retaining feature 236 may be a protrusion, such as a flange, forming a surface to locate the seal. The terminal body 200 includes a rear flange 238 at the rear 212. The rear flange 238 may define the rear end of the mounting portion 230. The rear flange 238 may be located within the terminal channel 116 of the charging inlet housing 110. Optionally, the seal may be located forward of the rear flange 238 or rearward of the rear flange 238.

In an exemplary embodiment, the terminal body 200 includes a power cable termination 240 at the rear 212. The power cable termination 240 is configured to be electrically connected to the power conductor 124. In an exemplary embodiment, the power cable termination 240 is tubular. For example, the shell 214 along the power cable termination 240 may be cylindrical with the interior bore 216 passing through the power cable termination 240. In an exemplary embodiment, the power cable termination 240 forms a crimp barrel 242. The crimp barrel 242 may receive the end of the power conductor 124 (for example, cable or wire) and the crimp barrel 242 may be crimped to the end of the power conductor 124. The crimp barrel 242 may be cylindrical. In other various embodiments, the crimp barrel 242 may have another shape, such as U-shaped, to receive the end of the power conductor 124 and later crimped or formed around the power conductor 124 (for example, an F-crimp). The power cable termination 240 may have other shapes in alternative embodiments, such as being flat. For example, the power cable termination 240 may be formed into a flat shape to form a weld pad to allow welding of the power conductor 124 to the weld pad or a bolt pad, with a bolt opening, to allow a bolted connection to the power conductor 124. In other various embodiments, the power cable termination 240 may include a threaded bore at the rear end of the internal bore 216 configured to receive a threaded bolt, which is used to electrically connect to the power conductor 124.

In an exemplary embodiment, the charging terminal 120 includes a dielectric inner body 250 received in the interior bore 216 of the shell 214. The inner body 250 may be a molded part, such as a molded plastic part. In an exemplary embodiment, the inner body 250 includes the protection cap 202 at the front 210. For example, a portion of the inner body 250 may extend from the front 210 of the terminal body 200 to form the protection cap 202. In an exemplary embodiment, the inner body 250 may be pre-molded and inserted into the interior bore 216, such as from the front 210. In alternative embodiments, the inner body 250 may be formed in place in the shell 214.

In an exemplary embodiment, the inner body 250 includes an opening 252 at the front. The opening 252 is configured to receive a pin of the charging connector. The size (diameter and length) of the opening 252 may be selected to provide keyed mating with the charging connector.

In an exemplary embodiment, the inner body 250 includes a retention feature 254 to retain the inner body 250 in the shell 214. In the illustrated embodiment, the retention feature 254 is located at the rear of the inner body 250. Other locations are possible in alternative embodiments. In the illustrated embodiment, the retention feature 254 includes a shoulder 256 configured to receive a complimentary retention feature 258 of the shell 214. The shoulder 256 may be forward facing. The retention feature 258 may be a deflectable latch configured to interface with the shoulder 256 to retain the inner body 250 in the interior bore 216 and prevent pull out of the inner body 250 from the shell 214. Other types of retention features may be used in alternative embodiments.

In an exemplary embodiment, the inner body 250 includes a seal pocket 260 holding a seal 262. The seal 262 is configured to be sealed to the interior surface of the shell 214 to seal the interior bore 216. The seal 262 may be an o-ring or other type of seal.

In an exemplary embodiment, the inner body 250 includes a lip 264 forming a portion of the protection cap 202. The lip 264 is rearward facing and configured to interface with the front 210 of the shell 214. The lip 264 is used to locate the protection cap 202 and the inner body 250 relative to the shell 214.

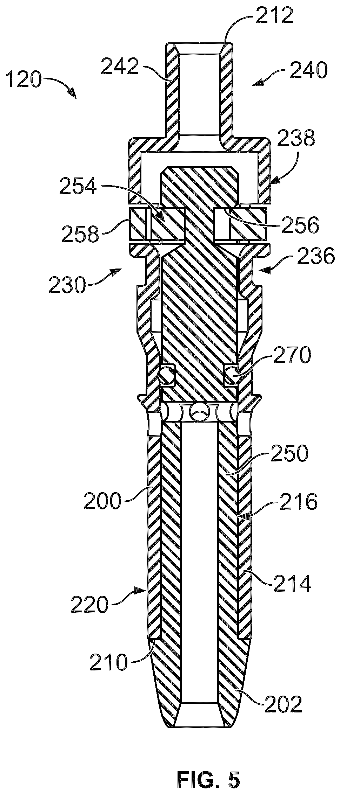

Figure 5 is a cross-sectional view of the charging terminal 120 in accordance with an exemplary embodiment. In an exemplary embodiment, the terminal body 200 is manufactured by a deep drawing process. A piece of metal stock is drawn into a tube shape to form the shell 214 and the interior bore 216. The deep drawing process allows forming of various features on the terminal body 200, such as to form the exterior shape of the mating pin 220, the mounting portion 230, and the power cable termination 240. The rear flange 238 and the seal retaining feature 236 (for example, seal grooves) may be formed along the mounting portion 230. The crimp barrel 242 may be formed along the power cable termination 240 at the rear 212. Other features may be formed by the drawing process.

The inner body 250 and the protection cap 202 are coupled to the terminal body 200. The inner body 250 may be press fit or otherwise loaded into the interior bore 216, such as through the front 210, with the protection cap 202 extending forward of the terminal body 200. In an exemplary embodiment, the inner body 250 includes the bore seal 270 received in the interior bore 216 to seal the interior bore 216. In the illustrated embodiment, the retention feature 258 is a clip or other type of retainer, coupled to the terminal body 200 and extending into the interior bore 216 to interface with the retention feature 254 of the inner body 250 at the shoulder 256. Other types of retention features may be used in alternative embodiments. A temperature sensor (not shown) may be integrated into the inner body 250 to monitor a temperature of the terminal body 200.

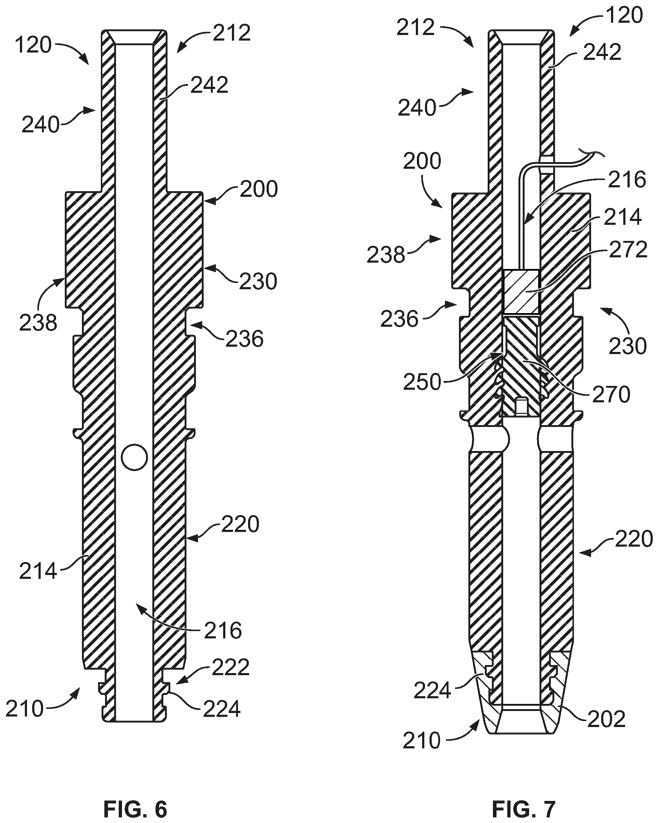

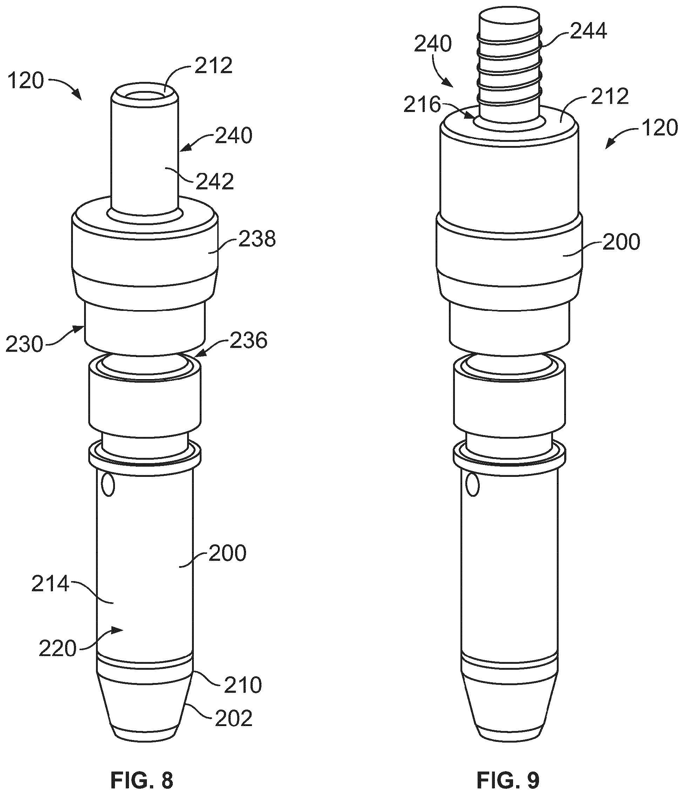

Figure 6 is a cross sectional view of a portion of the charging terminal 120 in accordance with an exemplary embodiment showing the terminal body 200. Figure 7 is a cross sectional view of a portion of the charging terminal 120 in accordance with an exemplary embodiment showing the protection cap 202 coupled to the terminal body 200. Figure 8 is a perspective view of the charging terminal 120 in accordance with an exemplary embodiment.

In an exemplary embodiment, the terminal body 200 is manufactured by a deep drawing process. A piece of metal stock is drawn into a tube shape to form the shell 214 and the interior bore 216. The deep drawing process allows forming of various features on the terminal body 200, such as to form the exterior shape of the mating pin 220, the mounting portion 230, and the power cable termination 240. For example, a cap pocket 222 and cap retention features 224 may be formed along the mating pin 220, such as at the front 210. The rear flange 238 and the seal retaining feature 236 (for example, seal grooves) may be formed along the mounting portion 230. The crimp barrel 242 may be formed along the power cable termination 240 at the rear 212. Other features may be formed by the drawing process.

The protection cap 202 is coupled to the terminal body 200 at the front 210. The protection cap 202 may be press fit onto the cap retention features 224. Alternatively, the protection cap 202 may be molded in place on the terminal body 200 to interface with the cap retention features 224.

In an exemplary embodiment, the inner body 250 may include a bore seal 270 received in the interior bore 216. The bore seal 270 may be loaded into the front 210 or into the rear 212. The bore seal 270 seals the interior bore 216.

In an exemplary embodiment, a temperature sensor 272 is located in the interior bore 216 to monitor a temperature of the terminal body 200. The temperature sensor 272 may be located proximate to the mating pin 220. The temperature sensor 272 may be fixed to the bore seal 270 to position the temperature sensor 272 in the interior bore 216. The charging process may be controlled based on readings from the temperature sensor 272. For example, if the terminal body 200 is at or near a threshold temperature, the charging process may be stopped or slowed, such as at a lower charging current.

Figure 9 illustrates a charging terminal 120 in accordance with an exemplary embodiment. Figure 9 shows a threaded bolt 244 at the power cable termination 240. The power cable termination 240 includes a threaded portion at the rear 212 along the interior bore 216. The threaded bolt 244 is configured to be threadably coupled to the terminal body 200 at the threaded portion of the power cable termination 240. The threaded bolt 244 extends rearward of the terminal body 200 for connection to the power conductor 124.

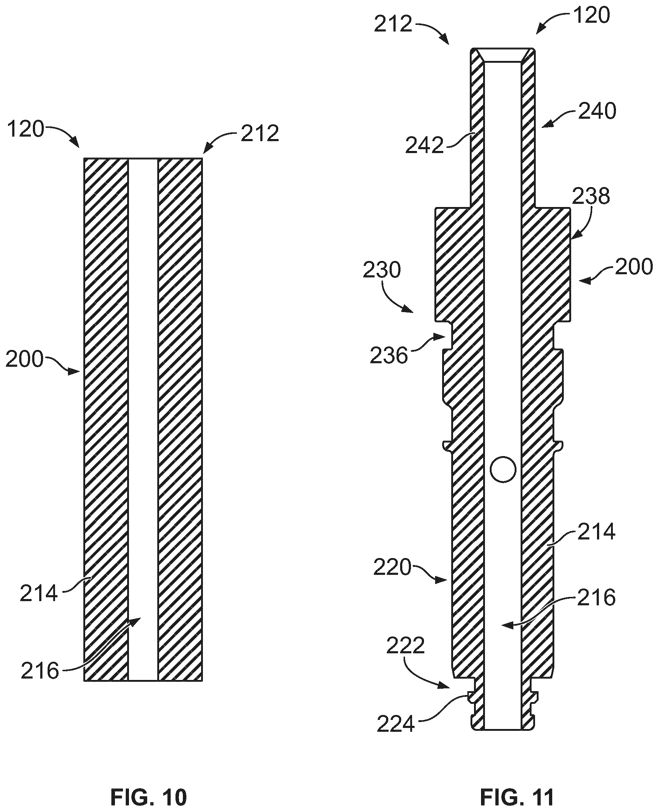

Figure 10 is a cross sectional view of a portion of the charging terminal 120 in accordance with an exemplary embodiment showing the terminal body 200 in an initial formed state. Figure 11 is a cross sectional view of a portion of the charging terminal 120 in accordance with an exemplary embodiment showing the terminal body 200 in a final formed state.

In an exemplary embodiment, the terminal body 200 is manufactured by an extrusion process. A piece of metal stock is extruded into a tube shape (Figure 9) to form the shell 214 and the interior bore 216. The tube has an outer diameter and an inner diameter defining the interior bore 216. The tube is then processed, such as by a machining process, to form the various features on the terminal body 200, such as to form the final exterior shape of the mating pin 220, the mounting portion 230, and the power cable termination 240. For example, the cap pocket 222 and the cap retention features 224 may be formed along the mating pin 220, the rear flange 238 and the seal retaining feature 236 (for example, seal grooves) may be formed along the mounting portion 230, and the crimp barrel 242 may be formed along the power cable termination 240 at the rear 212. Other features may be formed by the machining process. The machining process may include turning the tube on a lathe to remove material from the terminal body 200 to form the desired external shape.

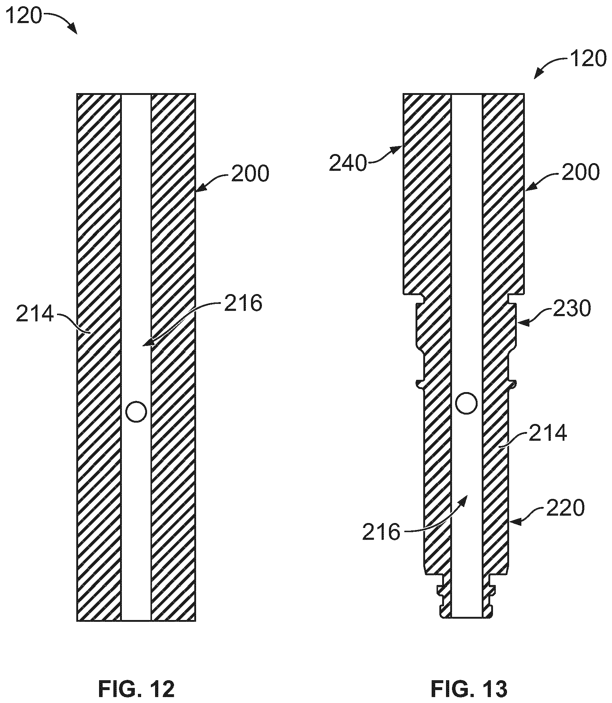

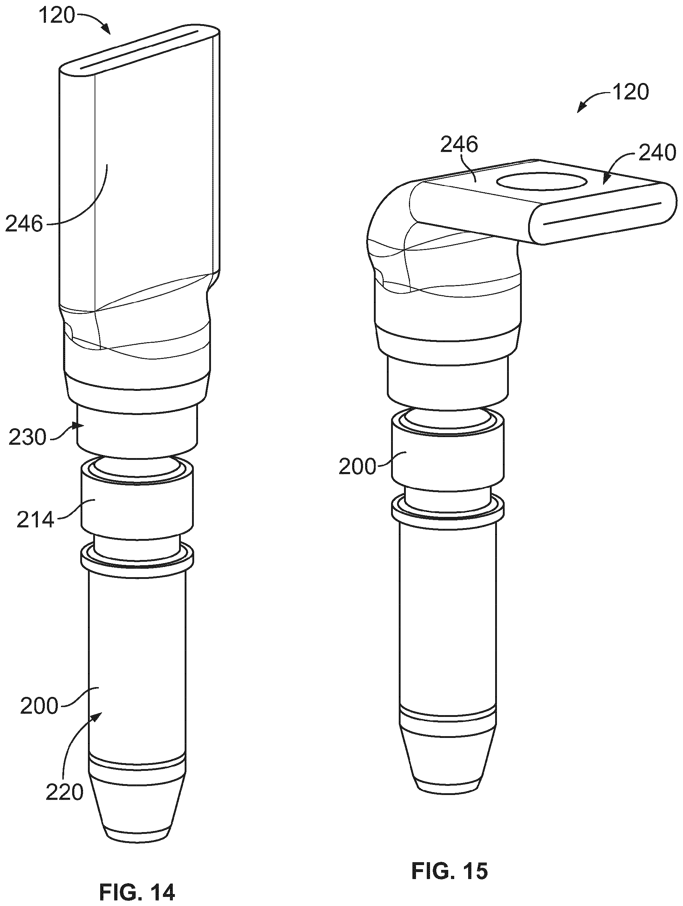

Figure 12 is a cross sectional view of a portion of the charging terminal 120 in accordance with an exemplary embodiment showing the terminal body 200 in an initial formed state. Figure 13 is a cross sectional view of a portion of the charging terminal 120 in accordance with an exemplary embodiment showing the terminal body 200 in an intermediate formed state. Figure 14 illustrates a portion of the charging terminal 120 in accordance with an exemplary embodiment showing the terminal body 200 in a final formed state. In the final formed state, the power cable termination 240 includes a weld pad 246 rather than the crimp barrel.

In an exemplary embodiment, the terminal body 200 is manufactured by an extrusion process. A piece of metal stock is extruded into a tube shape (Figure 11) to form the shell 214 and the interior bore 216. The tube is processed, such as by a machining process, to form the various features on the terminal body 200 (Figure 12), such as to form the final exterior shape of the mating pin 220 and the mounting portion 230. The tube is then further processed, such as by a forming process, to form the various features of the power cable termination 240, such as the weld pad 246 (Figure 13). For example, the rear end of the terminal body 200 may be flattened into a flat shape, rather than the tubular shape, to form the weld pad 246.

Figure 15 illustrates a portion of the charging terminal 120 in accordance with an exemplary embodiment showing the terminal body 200 in a final formed state. In the final formed state, the power cable termination 240 includes the pad 246 oriented at a right angle (for example, 90° relative to the longitudinal axis of the charging terminal 120). The pad 246 may be a weld pad. The pad 246 may have an opening therethrough, such as for a bolted connection. The tube is processed, such as by a forming process, to form the pad 246 at the right angle.

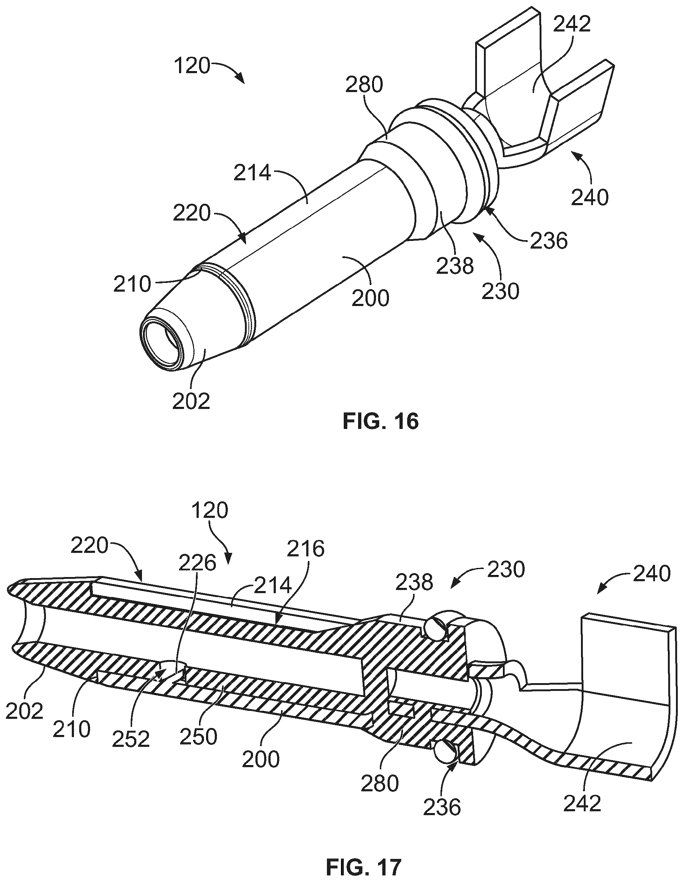

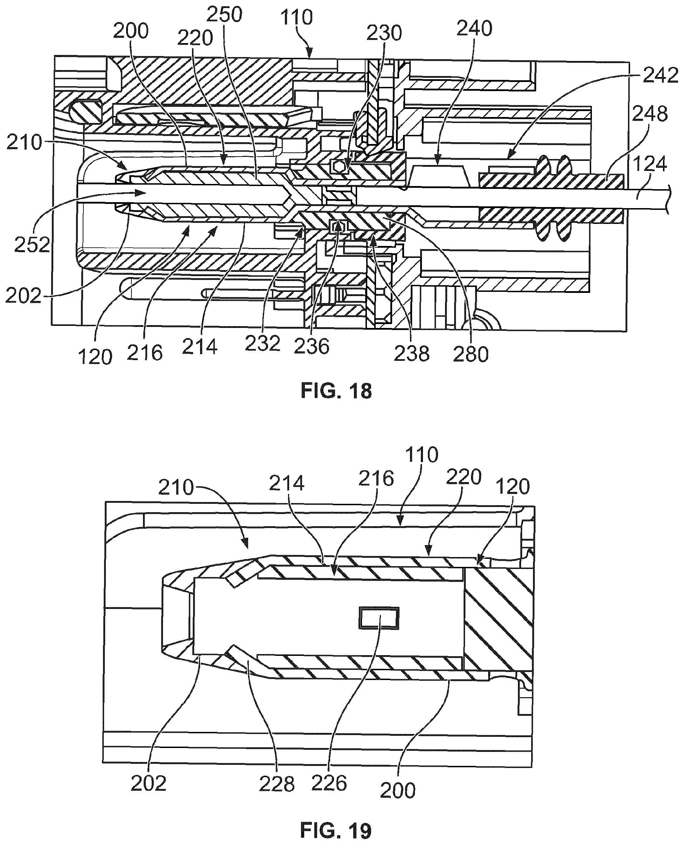

Figure 16 illustrates the charging terminal 120 in accordance with an exemplary embodiment. Figure 17 is a cross-sectional view of the charging terminal 120 shown in Figure 16. Figure 18 is a cross sectional view of a portion of the charging terminal 120 shown in Figure 16 showing the charging terminal 120 in the charging inlet housing 110. Figure 19 is an enlarged view of a portion of the charging terminal 120 shown in Figure 16.

In an exemplary embodiment, the terminal body 200 is manufactured by a stamping and forming process. A piece of metal stock is stamped into a predetermined shape and then formed into a tube shape to form the shell 214 and the interior bore 216. The stamping and forming process forms the terminal body 200 into the desired shape, such as to form the mating pin 220, the mounting portion 230, and the power cable termination 240.

In the illustrated embodiment, the power cable termination 240 includes the crimp barrel 242, such as an F-crimp barrel. The crimp barrel 242 is configured to be crimped to an end of the power conductor 124. A cable or wire seal 248 may be crimped at the crimp barrel 242 to seal the power conductor 124.

In an exemplary embodiment, the mounting portion 230 is necked down to have a smaller diameter than the mating pin 220. In an exemplary embodiment, the charging terminal 120 includes a dielectric sheath 280 surrounding the mounting portion 230. The dielectric sheath 280 forms an exterior portion of the charging terminal 120. The dielectric sheath 280 is located rearward of the mating pin 220. In an exemplary embodiment, the dielectric sheath 280 is formed in place on the mounting portion 230 of the terminal body 200. For example, the dielectric sheath 280 may be molded onto the mounting portion 230. The dielectric sheath 280 may be formed to include the latching feature 232 and/or the seal retaining feature 236 and/or the rear flange 238.

In an exemplary embodiment, the dielectric sheath 280 is integral with the inner body 250. For example, the dielectric sheath 280 is co-molded with the inner body 250. The dielectric sheath 280 and/or the inner body 250 may be co-molded with the protection cap 202. In an exemplary embodiment, the inner body 250 fills a portion of the shell 214 to seal the interior bore 216, such as rearward of the opening 252.

In an exemplary embodiment, the terminal body 200 includes retention tabs 226 (Figure 17) along the mating pin 220. The retention tabs 226 extend into the interior bore 216. The retention tabs 226 are used to retain the inner body 250 in the interior bore 216. The retention tabs 226 may be stamped from the shell 214. The retention tabs 226 may be received in pockets formed in the inner body 250 to secure the inner body 250 in the shell 214.

In an exemplary embodiment, the terminal body 200 includes support tabs 228 (Figure 19) along the mating pin 220, such as at the front 210. The support tabs 228 extend into the interior bore 216. The support tabs 228 press outward against the protection cap 202 to support the protection cap 202. The support tabs 228 may be stamped from the shell 214.

## Claims

1. A method of manufacturing a charging terminal (120) for a charging inlet assembly (100) comprising:
forming a terminal body (200) to include a shell (214) surrounding an interior bore (216), wherein the terminal body extends between a front (130) and a rear (132) and the interior bore extends the entire length of the terminal body from the front to the rear, wherein said forming the terminal body includes one of deep drawing the terminal body to form the shell and the interior bore or stamping and forming the terminal body to form the shell and the interior bore or extruding the terminal body into a tube to form the shell and the interior bore;
forming a mating pin (220) at the front for mating with a charging connector;
forming a power cable termination (240) at the rear for termination to a power cable; and
securing a protection cap (202) to the front, the protection cap being dielectric, wherein the protection cap extends forward of the mating pin.

2. The method of claim 1, wherein said forming the power cable termination (240) includes machining the terminal body (200) to form the power cable termination.

3. The method of claim 1 or 2, further comprising surrounding a portion of the shell (214) with a dielectric sheath (280) rearward of the mating pin (220), and optionally co-molding the dielectric sheath (280) and the protection cap (202).

4. A charging terminal (120) for a charging inlet assembly (100) comprising:
a terminal body (200) forming a shell (214) surrounding an interior bore (216), the terminal body extending between a front (130) and a rear (132), the interior bore extending the entire length of the terminal body from the front to the rear, the terminal body including a mating pin (220) at the front for mating with a charging connector, the terminal body including a power cable termination (240) at the rear for termination to a power cable; and
a protection cap (202) received in the interior bore at the mating end, the protection cap extending forward of the mating pin, the protection cap being dielectric.

5. The charging terminal (120) of claim 4, wherein the shell (214) is generally cylindrical.

6. The charging terminal (120) of claim 4 or 5, wherein the shell (214) is formed from sheet metal having a sheet metal thickness.

7. The charging terminal (120) of claim 4, 5 or 6, wherein the shell (214) has a diameter to thickness ratio of greater than 3:1, for example greater than 4:1.

8. The charging terminal (120) of any one of claims 4 to 7, further comprising a bore seal (270) in the interior bore (216) to seal the interior bore between the front (130) and the rear (132).

9. The charging terminal (120) of any one of claims 4 to 8, wherein the power cable termination (240), includes one of a crimp barrel (242), a weld pad (246), a bolt pad, or a threaded bolt threadably received in the interior bore (216).

10. The charging terminal (120) of any one of claims 4 to 9, further comprising a temperature sensor (272) disposed in the interior bore (216).

11. The charging terminal (120) of any one of claims 4 to 10, wherein the shell (214) includes a retention latch extending into the interior bore (216) to retain the protection cap (202) in the interior bore.

12. The charging terminal (120) of any one of claims 4 to 11, further comprising a dielectric sheath (280) surrounding a portion of the shell (214) rearward of the mating pin (220), wherein the dielectric sheath (280) is optionally integral with the protection cap (202).

13. The charging terminal (120) of claim 12, wherein the dielectric sheath (280) holds a terminal seal.

14. The charging terminal (120) of any one of claims 4 to 13, wherein the shell (214) includes at least one of:
a flange (238) at an exterior of the shell;
a seal groove (236) holding a terminal seal.

15. A charging inlet assembly (100) comprising:
a housing (110) extending between a front (130) and a rear (132), the housing having terminal channels (116) between the front and the rear;
power cables each extending to an end; and
charging terminals (120) received in the corresponding terminal channel and coupled to the housing, each charging terminal being in accordance with any one of claims 4 to 14 with the power cable termination (240) at the rear being terminated to a corresponding one of the power cables.
